# EUROPÄISCHE PATENTSCHRIFT

(11) **EP 2 690 017 B1**
(45) Veröffentlichungstag und Bekanntmachung des Hinweises auf die Patenterteilung: **15.02.2017**
(21) Anmeldenummer: 13177777.3
(22) Anmeldetag: 24.07.2013
(51) Int. Cl.: B64D 11/06

(54) **Fixiervorrichtung für einen Ausstattungsgegenstand an einer Fixierschiene**
Device for fitting an item of equipment to a fitting rail
Dispositif de fixation pour un objet d'équipement sur un rail de fixation

(30) Priorität: 27.07.2012 DE 102012106865
(43) Veröffentlichungstag der Anmeldung: 29.01.2014
(73) Patentinhaber: Airbus Defence and Space GmbH, 85521 Ottobrunn (DE)
(72) Erfinder: Rollfink, Patrick, 22765 Hamburg (DE); Pommers, Martins, 1013 Riga (LV)
(74) Vertreter: Isarpatent

(56) Entgegenhaltungen:
- EP-A1- 1 342 662
- DE-A1-102010 053 746
- DE-A1-102011 013 688
- DE-A1-102011 013 689
- US-A- 4 496 271

## Beschreibung

Die Erfindung betrifft eine Vorrichtung zur Fixierung eines Ausstattungsgegenstandes an einer am Boden einer Kabine angebrachten Fixierschiene, die zwei parallele durch einen Längsschlitz getrennte Halteflanken umfasst und eine Anzahl beabstandeter Ausnehmungen aufweist, wobei die Vorrichtung an ihrer Oberseite Mittel zur Fixierung des Ausstattungsgegenstandes sowie an der Unterseite mindestens zwei an Größe und Anordnung von mindestens zwei benachbarten Ausnehmungen angepasste und in diese einführbare Schließvorsprünge aufweist, und wobei durch Verschieben der Schließvorsprünge in Längsrichtung der Fixierschiene bis die Schließvorsprünge zwischen benachbarten Ausnehmungen liegen, eine formschlüssige Verbindung zwischen Vorrichtung und Fixierschiene bewirkbar ist.

Die Druckschrift DE 10 2011 013 688 A1 beschreibt eine Vorrichtung mit den Merkmalen gemäß dem Oberbegriff des Patentanspruchs 1.

Eine solche Vorrichtung ist beispielsweise auch aus der US 5 871 318 bekannt und dient dazu, insbesondere Flugzeugsitze entlang von in einem Luftfahrzeug am Kabinenboden angebrachten Fixierschienen längsverschiebbar zu machen. Um die Flugzeugsitze an den Fixierschienen zu befestigen wird die Vorrichtung zunächst so ausgerichtet, dass ein Stützteil mit angeformten Vorsprüngen fluchtend zu den kreisförmigen Ausnehmungen gebracht wird, so dass dieses durch den Längsschlitz in der Fixierschiene bewegt werden kann. Sodann wird das Stützteil um den halben Abstand zwischen benachbarten Ausnehmungen in Schienenlängsrichtung bewegt, wobei die im Querschnitt T-förmigen Vorsprünge hinter den beiderseitigen Halteflanken der Fixierschiene greifen und ein Heraustreten des Stützteils aus der Fixierschiene verhindern. Sodann werden in einem dritten Schritt Verriegelungsteile vom Stützteil nach unten gefahren, die eine entsprechende Kontur aufweisen, dass diese in den nunmehr darunter befindlichen Ausnehmungen gehalten sind. Diese Verriegelungsteile werden dabei gegen die Halteflanken gedrückt und bewirken eine Fixierung des Stützteils und damit des daran angebrachten Sitzes in der Schiene.

Nachteilig dabei ist, dass die Stützteile nach dem Einstecken in die Fixierschiene bewegt werden müssen und zwar möglichst genau um den halben Ausnehmungsabstand, damit die Verriegelungsteile in die Ausnehmungen greifen und damit eine sichere Verriegelung möglich ist. Da normalerweise mehrere Sitze in einer Reihe zusammen auf einer Sitzstütze angeordnet sind, muss diese ganze Sitzreihe bewegt werden. Dieser Vorgang erfordert Montagezeit, zumal wenn die vom Personal Strecke, um welche die Sitzreihe verschoben wurde, zu sehr vom Sollwert abweicht, eine Verriegelung nicht möglich ist. Auch kann es zu einem Verkanten und damit Klemmen beim Verschiebevorgang kommen.

Aufgabe der Erfindung ist es, obige Nachteile zu vermeiden und eine baulich einfache Vorrichtung zur Fixierung eines Ausstattungsgegenstandes an einer am Boden einer Kabine angebrachten Fixierschiene zu ermöglichen, die eine schnellere und unkomplizierte Montage erlaubt.

Die Lösung dieser Aufgabe ergibt sich aus den Merkmalen des Anspruchs 1. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Insbesondere wird die Aufgabe dadurch gelöst, dass die Vorrichtung ein Stützteil umfasst, dessen Unterseite einen an die Kontur des Längsschlitzes angepassten Einsteckabschnitt aufweist, der in die Fixierschiene einsteckbar ist, und am Stützteil ein in die Fixierschiene einsteckbares Schiebeteil längsverschiebbar geführt ist, dessen Außenkontur dem des Einsteckabschnitts entspricht, wobei das Schiebeteil in der Fixierschiene relativ zum Stützteil zur Fixierung des Stützteils verschiebbar ist.

Diese Ausbildung hat den Vorteil, dass das Stützteil nur in die Fixierschiene gesteckt werden muss und dort verbleibt, also nicht nach dem Einstecken der Ausstattungsgegenstand (z.B. die Sitzreihe) in Schienenlängsrichtung verschoben werden muss - oder über kann - sondern in dieser Stellung verbleibt. Vielmehr wird das in der entriegelten Stellung unterhalb des Stützteils angeordnete Schiebeteil um den halben Abstand zwischen benachbarten Ausnehmungen verschoben. In diesem Zustand ist das Stützteil in der Fixierschiene formschlüssig gehalten.

Gemäß einer vorteilhaften Weiterbildung der Erfindung weist der Einsteckabschnitt die Kontur von zwei oder drei benachbarten Ausnehmungen auf. Auf diese Weise wird erreicht, dass eine stabile Auflage des Stützteils auf der Fixierschiene gewährleistet wrid.

Gemäß einer vorteilhaften Weiterbildung der Erfindung entspricht die Kontur des Schiebeteils der Kontur von zwei oder drei benachbarten Ausnehmungen. Dies verhindert ein Verkanten des Schiebeteils bei dessen Bewegung.

Gemäß einer vorteilhaften Weiterbildung der Erfindung weist der Boden des Stützteils eine sich in Längsrichtung erstreckende T-Nut und das Schiebeteil einen entsprechenden im Querschnitt T-förmigen Führungsabschnitt auf. Dies ermöglicht eine gute und sichere Führung des Schiebeteils im Stützteil. Unter T-förmig wird auch eine Schwalbenschwanz- oder ähnliche Form der Nut bzw. Führung verstanden.

Erfingdungsgemäß ist das Schiebeteil im Wesentlichen L-förmig ausgebildet mit einem vertikal sich erstreckenden Betätigungsvorsprung. Dieser stirnseitig vor dem Stützteil angeordnete Betätigungsvorsprung ragt aus dem Längsschlitz heraus und ermöglicht es, von außerhalb des Längsschlitzes das Schiebeteil innerhalb der Fixierschiene unter dem Stützteil in Schienenlängsrichtung zu verschieben.

Vorzugsweise liegt der Betätigungsvorsprung im verriegelten Zustand am Stützteil an oder an einem am Stützteil angeformten Anschlag. Vorzugsweise weist der Betätigungsvorsprung im entriegelten Zustand einen Abstand zum Stützteil auf, der dem halben Abstand zwischen benachbarten Ausnehmungen entspricht.

Gemäß einer vorteilhaften Weiterbildung der Erfindung ist das Schiebeteil relativ zu dem Stützteil um eine Strecke bewegbar, die dem halben Abstand zwischen benachbarten Ausnehmungen in der Fixierschiene entspricht. Dazu sind entweder in der Führung des Schiebeteils im Stützteil oder an anderer Stelle entsprechende Begrenzungen vorgesehen. Eine einfache Ausbildung besteht darin, dass der Betätigungsvorsprung in der verriegelten Stellung am Stützteil oder einem daran angebrachten Anschlag anliegt und am Ende der T-Führung des Schiebeteils ein Vorsprung ausgebildet ist, der dann am Stützteil anschlägt.

Gemäß einer vorteilhaften Weiterbildung der Erfindung ist am Betätigungsvorsprung ein Führungsvorsprung angeformt, dem im Stützteil eine entsprechend geformte Führungsvertiefung zugeordnet ist, wobei der Führungsvorsprung bei der Verschiebung des Schiebeteils in den verriegelten Zustand in die Führungsvertiefung eintaucht. Diese Ausbildung bewirkt eine Versteifung der Verbindung zwischen Stützteil und Schiebeteil im verriegelten Zustand.

Gemäß einer vorteilhaften Weiterbildung der Erfindung weist das Stützteil an einem Stirnende eine Verriegelungsführung auf, in der ein Verriegelungselement bewegbar gehalten ist, und im Schiebeteil ein das Verriegelungselement aufnehmende Gegenstück ausgebildet ist, so dass das Schiebeteil gegenüber dem Stützteil verriegelt ist, wenn sich das Verriegelungselement in der verriegelten Stellung befindet. Diese Ausbildung stellt sicher, dass die erfindungsgemäße Vorrichtung nicht unbeabsichtigt aus der verriegelten in die entriegelte Stellung gelangt und damit - beispielsweise durch Vibrationen - eine unbeabsichtigte Lösung des mittels der erfindungsgemäßen Vorrichtung gehaltenen Ausstattungsgegenstand erfolgt.

Vorzugsweise ist das Verriegelungselement ein vertikal bewegbarer Stift und das Gegenstück eine Vertiefung. Dies ist eine baulich sehr einfache Ausbildung.

Vorzugsweise ist das Verriegelungselement elastisch in die Schließstellung beaufschlagt und rastet bei Erreichen der verriegelten Stellung automatisch ein. Diese Ausbildung ermöglicht eine besonders einfache und schnelle Montage, weil eine getrennte Verriegelung nicht erforderlich ist. Dabei ist es weiter von Vorteil, wenn das Verriegelungselement hörbar oder haptisch wahrnehmbar einrastet.

Vorzugsweise weist das Verriegelungselement manuell betätigbare Entriegelungsmittel auf, beispielsweise ein Griff oder Ringabschnitt, durch den ein Finger steckbar ist, um manuell das Verriegelungselement in die entriegelte Stellung zu bewegen. Oder das Verriegelungselement hat einen kleinen Vorsprung im geführten Mittelbereich und in der Verriegelungsführung ist eine entsprechende Führung für den Vorsprung vorgesehen, so dass jeweils durch eine 90°-Drehung an beiden Endstellungen der Stift in eine arretierte Stellung zu bringen ist.

Vorzugsweise umfasst das Verriegelungselement einen Indikator zur Anzeige des Verriegelungszustandes, beispielsweise einen roten Stiftabschnitt, der im entriegelten Zustand hervorragt und anzeigt, dass eine Verriegelung nicht stattgefunden hat.

Eine bevorzugte Verwendung der Erfindung ist in einem Luftfahrzeug, insbesondere einem Passagierflugzeug und der Ausstattungsgegenstand ist bevorzugt ein Flugzeugsitz oder eine Flugzeugsitzreihe.

Weitere Vorteile, Merkmale und Einzelheiten ergeben sich aus der nachfolgenden Beschreibung, in der - unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung. Gleiche, ähnliche und/oder funktionsgleiche Teile sind mit gleichen Bezugszeichen versehen.

Es zeigen:
- Figur 1:: eine perspektivische Ausschnittsdarstellung einer Fixierschiene;
- Figur 2:: eine perspektivische Darstellung der erfindungsgemäßen Vorrichtung im entriegelten Zustand;
- Figur 3:: eine perspektivische Darstellung der erfindungsgemäßen Vorrichtung im verriegelten Zustand;
- Figur 4:: ein Längsschnitt durch die erfindungsgemäße Vorrichtung;
- Figur 5:: eine Stirnansicht der erfindungsgemäßen Vorrichtung.

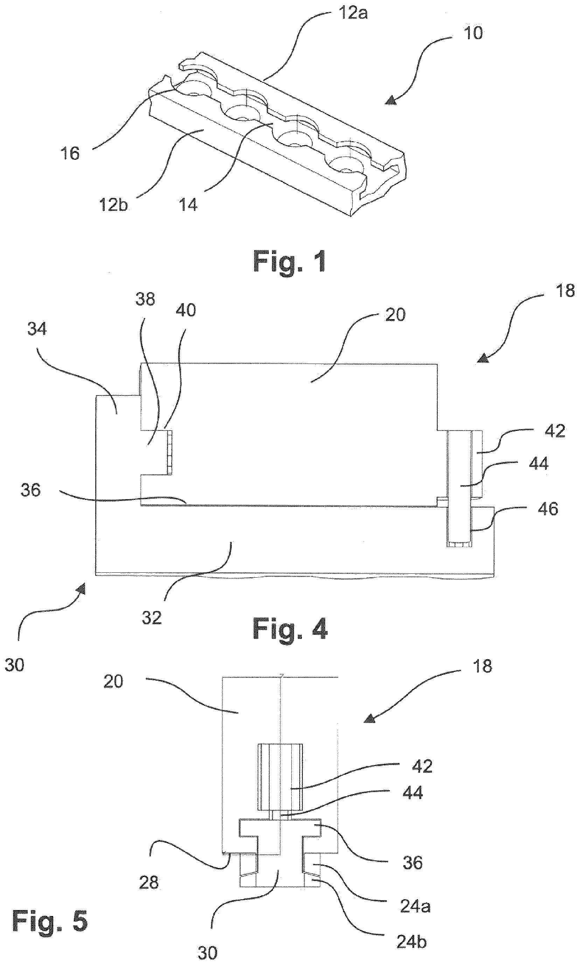

In Figur 1 ist eine Fixierschiene 10 dargestellt, wie diese in Luftfahrzeugen, insbesondere Passagierflugzeugen angeordnet sind, um daran Ausstattungsgegenstände wie Sitze, Sitzreihen, Trennwände, Bordküchen oder Gepäckhalterungen zu befestigen. Die Fixierschiene 10 umfasst zwei parallele Halteflanken 12a, 12b, zwischen denen ein Längsschlitz 14 definiert ist, der in regelmäßigen Abständen, beispielsweise von einem Zoll, kreisförmige Ausnehmungen 16 aufweist.

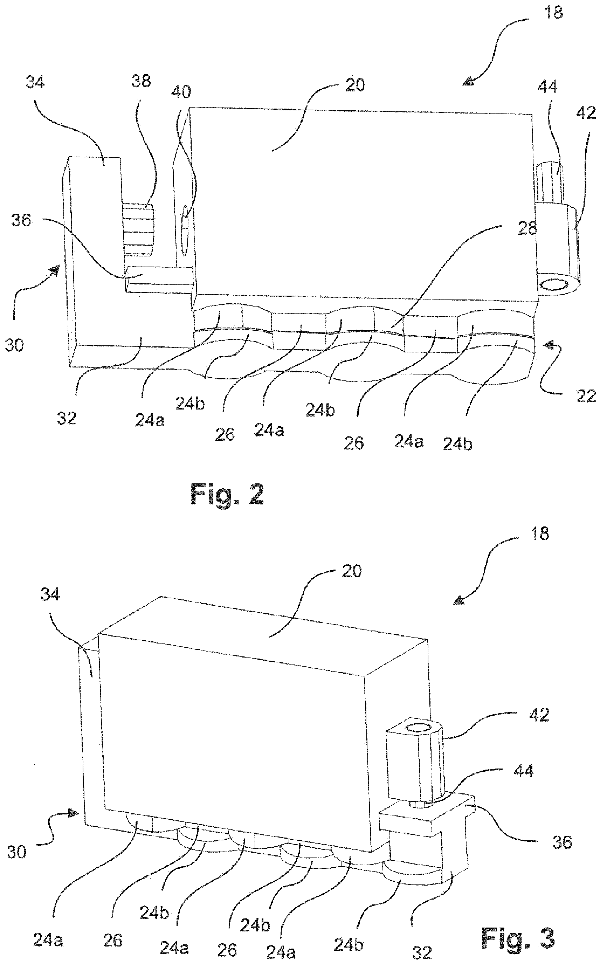

In Figur 2 ist die erfindungsgemäße Vorrichtung 18 in einer perspektivischen Darstellung von seitlich unten im entriegelten Zustand gezeigt. Die identische Vorrichtung 18 ist in Figur 3 in einer perspektivischen Darstellung von seitlich oben im verriegelten Zustand gezeigt. In Figur 4 ist die identische Vorrichtung 18 ebenfalls in verriegeltem Zustand in einem vertikalen Längsschnitt dargestellt.

Diese in den Figuren 1 bis 4 gezeigte Vorrichtung 18 umfasst ein Stützteil 20, an dessen in Figur 2 nicht sichtbarer Oberseite nicht dargestellte Vorrichtung zur Befestigung von Ausstattungsgegenständen angebracht sind. Unten am Stützteil 20 ist ein Einsteckabschnitt 22 angeformt, der eine Querschnittskontur aufweist, welche an die Kontur des Längsschnitzes 14 in der Fixierschiene 10 mit den Ausnehmungen 16 angepasst ist. Insbesondere besteht der Einsteckabschnitt 22 in der dargestellten Ausführungsform aus drei zylindrischen Abschnitten 24a, welche einen geringfügig kleinen Außendurchmesser aufweisen als die Durchmesser der Ausnehmungen 16 und im gleichen Abstand wie selbige angeordnet sind. Diese drei zylindrischen Abschnitten 24a sind über geradlinige Abschnitte 26 miteinander verbunden, deren Breite der lichten Breite des Längsschlitzes 14 in der Fixierschiene 10 entsprechen. Der Einsteckabschnitt 22 mit den drei zylindrischen Abschnitten 24a und den dazwischen angeordneten geradlinigen Abschnitte 26 kann also in die Fixierschiene 10 eingesteckt werden und stützt sich dabei entlang der Bodenfläche 28 des Stützteils 20 auf den Halteflanken 12a, 12b der Fixierschiene 10 ab.

Die Vorrichtung 18 umfasst ferner ein Schiebeteil 30, das im Wesentlichen L-förmig ausgebildet ist, als aus einem Horizontalabschnitt 32 und einem Betätigungsvorsprung 34 besteht. Der Horizontalabschnitt 32 weist die gleiche Außenkontur auf wie der Einsteckabschnitt 22 des Stützteils 20, umfasst also ebenfalls drei zylindrische Abschnitten 24b, die in der in Figur 1 dargestellten unverriegelten Ausführungsform mit den zylindrischen Abschnitten 24a des Einsteckabschnitts 22 fluchten. Das Schiebeteil 30 weist eine T- oder schwalbenschwanzartige Führung 36 auf, mittels der diese im Stützteil 20 geführt ist.

Am Betätigungsvorsprung 34 ist ein Führungsvorsprung 38 angeformt, der in eine daran angepasste Führungsvertiefung 40 eingreifen kann. In der in Figur 2 dargestellten unverriegelten Stellung befindet sich der Führungsvorsprung 38 außerhalb des Eingriffs mit der Führungsvertiefung 40, aber in der in Figur 3 gezeigten verriegelten Stellung befinden sich Führungsvorsprung 38 und Führungsvertiefung 40 im Eingriff, wodurch die Steifigkeit der Verbindung zwischen Stützteil 20 und Schiebeteil 30 im verriegelten Zustand erhöht wird.

Am Stützteil 20 ist ferner eine Verriegelungsführung 42 zur Aufnahme eines Verriegelungselements 44 vorgesehen, das in eine im Schiebeteil 30 ausgebildete Vertiefung 46 eintauchen kann. Das Verriegelungselement 44 wird über nicht dargestellte Federeinrichtungen nach unten gedrückt und rastet damit automatisch in der Vertiefung 46 ein, sobald diese mit einander fluchten. Um das Verriegelungselement 44 wieder aus der Vertiefung 46 zu bewegen, weist dieses nicht dargestellte Mittel auf, beispielsweise einen am oberen Ende angeformten Ringabschnitt, durch den man einen Finder stecken und dann anziehen kann. Das Verriegelungselement 44 weist vorzugsweise eine Signalfarbe oder eine Fluoreszenzbeschichtung auf, damit von außen erkennbar ist, ob dieses eingerastet ist oder nicht.

Die erfindungsgemäße Vorrichtung 18 befindet sich vor der Montage and der Fixierschiene 10 in der in Figur 2 gezeigten Stellung, bei der die zylinderförmigen Abschnitte 24a und 24b fluchten und damit ein Einführen in die Ausnehmungen 16 der Fixierschiene 10 möglich ist. In dieser Stellung befindet sich, wie bereits erwähnt, der Führungsvorsprung 38 außerhalb des Eingriffs mit der Führungsvertiefung 40 und das Verriegelungselement 44 außer Eingriff mit der Vertiefung 46. In dieser Stellung wird also die Vorrichtung 18 in den Längsschlitz 14 der Fixierschiene 10 geführt.

Anschließend wird durch manuelle Betätigung des Betätigungsvorsprungs 34 in Richtung zum Stützteil 20 hin das Schiebeteil 30 in die in Figur 3 und 4 gezeigte verriegelte Stellung bewegt. Bei dieser Stellung befinden sich die zylinderförmigen Abschnitte 24b des Horizontalabschnitts 32 um den halben Abstand zwischen benachbarten zylinderförmigen Abschnitten 24b, die identisch sind zu den Abständen zwischen benachbarten zylinderförmigen Abschnitten 24a und auch identisch sind zum Abstand zwischen benachbarten Ausnehmungen 16, versetzt. Dabei befinden sich die zylinderförmigen Abschnitten 24b unterhalb der Halteflanken 12a, 12b der Fixierschiene 10, so dass damit das Stützteil 20 in der Fixierschiene 10 gehalten ist. In dieser Stellung befindet sich gleichzeitig der Führungsvorsprung 38 im Eingriff mit der Führungsvertiefung 40 und erhöht damit die Steifigkeit der Verbindung. Ferner befindet sich in dieser Stellung das Verriegelungselement 44 im Eingriff mit der Vertiefung 46 und verhindert damit eine Rückbewegung des Schiebeteils 30 relativ zum Stützteil 20.

Damit beim Verriegelungsvorgang der erfindungsgemäßen Vorrichtung 18, also beim Längsverschieben des Schiebeteils 30 zugleich ein Verklemmen erfolgt, damit die Vorrichtung im verriegelten Zustand nicht wackelt, können die Abschnitte 24b des Schiebeteils 30 eine leichte Schrägung in Längs- bzw. Bewegungsrichtung aufweisen. Damit würde sich das Spiel beim Verschieben des Schiebeteils 30 automatisch immer weiter verringern und es kommt am Ende zu einem Klemmen.

### Bezugszeichenliste

- 10: Fixierschiene
- 12a,b: Halteflanken
- 14: Längsschlitz
- 16: Ausnehmungen
- 18: Vorrichtung
- 20: Stützteil
- 22: Einsteckabschnitt
- 24a,b: Abschnitt
- 26: Abschnitt
- 28: Bodenfläche
- 30: Schiebeteil
- 32: Horizontalabschnitt
- 34: Betätigungsvorsprung
- 36: Führung
- 38: Führungsvorsprung
- 40: Führungsvertiefung
- 42: Verriegelungsführung
- 44: Verriegelungselement
- 46: Vertiefung

## Patentansprüche

1. Vorrichtung zur Fixierung eines Ausstattungsgegenstandes an einer am Boden einer Kabine angebrachten Fixierschiene (10), die zwei parallele durch einen Längsschlitz getrennte Halteflanken (12a, 12b) umfasst sowie eine Anzahl beabstandeter Ausnehmungen (16) aufweist, wobei die Vorrichtung (18) an ihrer Oberseite Mittel zur Fixierung des Ausstattungsgegenstandes sowie an der Unterseite mindestens zwei an Größe und Anordnung von mindestens zwei benachbarten Ausnehmungen (16) angepasste und in diese einführbare Schließvorsprünge (24b) aufweist, und wobei durch Verschieben der Schließvorsprünge (24b) in Längsrichtung der Fixierschiene (10) bis die Schließvorsprünge (24b) zwischen benachbarten Ausnehmungen (16) liegen, eine formschlüssige Verbindung zwischen Vorrichtung (18) und Fixierschiene (10) bewirkbar ist, wobei die Vorrichtung (18) ein Stützteil (20) umfasst, dessen Unterseite einen an die Kontur des Längsschlitzes (14) angepassten Einsteckabschnitt (22) aufweist, der in die Fixierschiene (10) einsteckbar ist, und am Stützteil (20) ein in die Fixierschiene (10) einsteckbares Schiebeteil (30) längsverschiebbar geführt ist, dessen Außenkontur dem des Einsteckabschnitts (22) entspricht, wobei das Schiebeteil (30) in der Fixierschiene (10) relativ zum Stützteil (20) zur Fixierung des Stützteils (20) verschiebbar ist, wobei das Schiebeteil (30) im Wesentlichen L-förmig ausgebildet ist mit einem vertikal sich erstreckenden Betätigungsvorsprung (34), **dadurch gekennzeichnet, dass** der Betätigungsvorsprung (34) derart stirnseitig vor dem Stützteil (20) angeordnet ist und aus dem Längsschlitz (14) herausragt, dass er es ermöglicht, von außerhalb des Längsschlitzes das Schiebeteil (30) innerhalb der Fixierschiene (10) unter dem Stützteil in Schienenlängsrichtung zu verschieben.

2. Vorrichtung nach Anspruch 1, **dadurch gekennzeichnet, dass** der Einsteckabschnitt (22) die Kontur von zwei oder drei benachbarten Ausnehmungen (16) aufweist.

3. Vorrichtung nach Anspruch 1 oder 2, **dadurch gekennzeichnet, dass** die Kontur des Schiebeteils (30) der Kontur von zwei oder drei benachbarten Ausnehmungen (16) entspricht.

4. Vorrichtung nach einem der vorherigen Ansprüche, **dadurch gekennzeichnet, dass** der Boden des Stützteils (20) eine sich in Längsrichtung erstreckende T-Nut und das Schiebeteil (30) einen entsprechenden im Querschnitt T-förmigen Führungsabschnitt (36) aufweist.

5. Vorrichtung nach Anspruch 1, **dadurch gekennzeichnet, dass** der Betätigungsvorsprung (34) im verriegelten Zustand am Stützteil (20) anliegt.

6. Vorrichtung nach einem der vorherigen Ansprüche, **dadurch gekennzeichnet, dass** das Schiebeteil (30) relativ zu dem Stützteil (20) um eine Strecke bewegbar ist, die dem halben Abstand zwischen benachbarten Ausnehmungen (16) in der Fixierschiene (10) entspricht.

7. Vorrichtung nach einem der vorherigen Ansprüche, **dadurch gekennzeichnet, dass** das Stützteil (20) an einem Stirnende eine Verriegefungsführung (42) aufweist, in der ein Verriegelungselement (44) bewegbar gehalten ist, und im Schiebeteil (30) ein das Verriegelungselement (44) aufnehmende Gegenstück (46) ausgebildet ist, so dass das Schiebeteil (30) gegenüber dem Stützteil (20) verriegelt ist, wenn sich das Verriegelungselement (44) in der verriegelten Stellung befindet.

8. Vorrichtung nach Anspruch 7, **dadurch gekennzeichnet, dass** das Verriegelungselement (44) ein vertikal bewegbarer Stift ist und das Gegenstück eine Vertiefung (46) aufweist.

9. Vorrichtung nach Anspruch 7, **dadurch gekennzeichnet, dass** das Verriegelungselement (44) elastisch in die Schließstellung beaufschlagt und bei Erreichen der verriegelten Stellung automatisch einrastet.

10. Vorrichtung nach Anspruch 7, **dadurch gekennzeichnet, dass** das Verriegelungselement (44) manuell betätigbare Entriegelungsmittel aufweist.

11. Vorrichtung nach Anspruch 7, **dadurch gekennzeichnet, dass** das Verriegelungselement (44) einen Indikator zur Anzeige des Verriegelungszustandes umfasst.

12. Luftfahrzeug mit einer Vorrichtung nach einem der vorherigen Ansprüche.

13. Luffahrzeug nach Anspruch 12, **dadurch gekennzeichnet, dass** der Ausstattungsgegenstand ein Flugzeugsitz oder eine Flugzeugsitzreihe ist.

## Claims

1. Device for fixing an item of equipment to a fixing rail (10) that is attached to the floor of a cabin and comprises two parallel retaining flanks (12a, 12b) that are separated by means of a longitudinal slot, said fixing rail also comprises a number a spaced recesses (16), wherein the device (18) comprises on its upper surface means for fixing the item of equipment and also comprises on the underside at least two locking projections (24b) that can be tailored to suit the size and arrangement of at least two adjacent recesses (16) and said locking projections can be inserted into said recesses, and wherein it is possible to produce a positive-locking connection between the device (18) and the fixing rail (10) by means of displacing the locking projections (24b) in the longitudinal direction of the fixing rail (10) until the locking projections (24b) lie between adjacent recesses (16), wherein the device (18) comprises a supporting part (20) and the underside of said supporting part comprises a plug-in section (22) that is tailored to suit the contour of the longitudinal slot (14) and can be plugged into the fixing rail (10), and wherein a sliding part (30) that can be plugged into the fixing rail (10) is guided on the supporting part 20 in a longitudinally displaceable manner and the outer contour of said sliding part corresponds to the outer contour of the plug-in section (22), wherein the sliding part (30) can be displaced in the fixing rail (10) relative to the supporting part (20) so as to fix the supporting part (20), wherein the sliding part (30) is essentially embodied in an L-shaped manner having an actuating projection (34) that extends in a vertical manner, **characterized in that** the actuating projection (34) is arranged on the end face side in front of the supporting part (20) and protrudes out of the longitudinal slot (14) in such a manner that said actuating projection renders it possible from outside the longitudinal slot to displace the sliding part (30) within the fixing rail (10) below the supporting part in the rail longitudinal direction.

2. Device according to Claim 1, **characterized in that** the plug-in section (22) comprises the contour of two or three adjacent recesses (16).

3. Device according to Claim 1 or 2, **characterized in that** the contour of the sliding part (30) corresponds to the contour of two or three adjacent recesses (16).

4. Device according to any one of the preceding claims, **characterized in that** the base of the supporting part (20) comprises a T-groove that extends in the longitudinal direction and the sliding part (30) comprises a corresponding guiding section (36) that is T-shaped in the cross section.

5. Device according to Claim 1, **characterized in that** the actuating projection (34) lies against the supporting part (20) in the locked state.

6. Device according to any one of the preceding claims, **characterized in that** the sliding part (30) can be moved relative to the supporting part (20) to an extent that corresponds to half the distance between adjacent recesses (16) in the fixing rail (10).

7. Device according to any one of the preceding claims, **characterized in that** the supporting part (20) comprises on a front end face a locking guiding arrangement (42) in which a locking element (44) is retained in such a manner as to be able to move, and a mating piece (46) that receives the locking element (44) is embodied in the sliding part (30) so that the sliding part (30) is locked with respect to the supporting part (20) if the locking element (44) is in the locked position.

8. Device according to Claim 7, **characterized in that** the locking element (44) is a pin that can be moved in a vertical manner and the mating piece comprises a depression (46).

9. Device according to Claim 7, **characterized in that** the locking element (44) moves into the locking position in an elastic manner and automatically latches when reaching the locked position.

10. Device according to Claim 7, **characterized in that** the locking element (44) comprises unlocking means that can be actuated manually.

11. Device according to Claim 7, **characterized in that** the locking element (44) comprises an indicator for displaying the locking state.

12. Aircraft having a device according to any one of the preceding claims.

13. Aircraft according to Claim 12, **characterized in that** the item of equipment is an aircraft seat or a row of aircraft seats.

## Revendications

1. Dispositif destiné à la fixation d'un objet d'équipement sur un rail de fixation (10) monté sur le sol d'une cabine, le rail de fixation comprenant deux flancs de retenue (12a, 12b) parallèles séparés par une fente longitudinale et comportant un certain nombre d'évidements (16) espacés, le dispositif (18) comportant sur son côté supérieur des moyens pour la fixation de l'objet d'équipement ainsi que sur son côté inférieur au moins deux saillies de fermeture (24b) adaptées à la taille et à la disposition d'au moins deux évidements (16) voisins et pouvant être insérées dans ceux-ci, et dans lequel, en déplaçant les saillies de fermeture (24b) dans la direction longitudinale du rail de fixation (10) jusqu'à ce que les saillies de fermeture (24b) se trouvent entre des évidements (16) adjacents, une liaison par complémentarité de formes peut être obtenue entre le dispositif (18) et le rail de fixation (10), le dispositif (18) comprenant une pièce de support (20), dont le côté inférieur comporte une portion d'insertion (22) adaptée au contour de la fente longitudinale (14) et qui peut être insérée dans le rail de fixation (10), et, sur la pièce de support (20), une pièce coulissante (30), pouvant être insérée dans le rail de fixation (10), étant guidée mobile dans la direction longitudinale, le contour extérieur de la pièce coulissante correspond à celui de la portion d'insertion (22), la pièce coulissante (30) étant mobile dans le rail de fixation (10) par rapport à la pièce de support (20) pour la fixation de la pièce de support (20), dans lequel la pièce coulissante (30) est réalisée sensiblement en forme de L avec une saillie d'actionnement (34) s'étendant verticalement, **caractérisé en ce que** la saillie d'actionnement (34) est disposée côté frontal devant la pièce de support (20) et dépasse de la fente longitudinale (14) de telle manière qu'elle permet de déplacer, depuis l'extérieur de la fente longitudinale, la pièce coulissante (30) à l'intérieur du rail de fixation (10) sous la pièce de support dans la direction longitudinale du rail.

2. Dispositif selon la revendication 1, **caractérisé en ce que** la portion d'insertion (22) présente le contour de deux ou trois évidements (16) voisins.

3. Dispositif selon la revendication 1 ou 2, **caractérisé en ce que** le contour de la pièce coulissante (30) correspond au contour de deux ou trois évidements (16) voisins.

4. Dispositif selon l'une des revendications précédentes, **caractérisé en ce que** le fond de la pièce de support (20) comporte une rainure en T s'étendant dans la direction longitudinale et la pièce coulissante (30) comporte une portion de guidage (36) correspondante dont la section transversale est en forme de T.

5. Dispositif selon la revendication 1, **caractérisé en ce que**, dans l'état verrouillé, la saillie d'actionnement (34) appuie contre la pièce de support (20).

6. Dispositif selon l'une des revendication précédentes, **caractérisé en ce que** la pièce coulissante (30) peut être déplacée par rapport à la pièce de support (20) selon une distance qui correspond à la moitié de la distance entre des évidements (16) voisins dans le rail de fixation (10).

7. Dispositif selon l'une des revendications précédentes, **caractérisé en ce que** la pièce de support (20) comporte sur une extrémité frontale un guidage de verrouillage (42), dans lequel un élément de verrouillage (44) est maintenu mobile, et une pièce complémentaire (46) recevant l'élément de verrouillage (44) est formée dans la pièce coulissante (30), de telle sorte que la pièce coulissante (30) est verrouillée par rapport à la pièce de support (20) quand l'élément de verrouillage (44) se trouve dans la position verrouillée.

8. Dispositif selon la revendication 7, **caractérisé en ce que** l'élément de verrouillage (44) est une tige mobile verticalement et la pièce complémentaire comporte un creux (46).

9. Dispositif selon la revendication 7, **caractérisé en ce que** l'élément de verrouillage (44) est sollicité par une force élastique dans la position de fermeture et s'enclenche automatiquement lorsqu'il atteint la position verrouillée.

10. Dispositif selon la revendication 7, **caractérisé en ce que** l'élément de verrouillage (44) comporte des moyens de déverrouillage à actionnement manuel.

11. Dispositif selon la revendication 7, **caractérisé en ce que** l'élément de verrouillage (44) comprend un indicateur destiné à indiquer l'état de verrouillage.

12. Aéronef comprenant un dispositif selon l'une des revendications précédentes.

13. Aéronef selon la revendication 12, **caractérisé en ce que** l'objet d'équipement est un siège d'avion ou un rang de sièges d'avion.
